# EUROPÄISCHE PATENTSCHRIFT

(11) **EP 1 136 337 B1**
(45) Veröffentlichungstag und Bekanntmachung des Hinweises auf die Patenterteilung: **02.07.2003**
(21) Anmeldenummer: 01104456.7
(22) Anmeldetag: 28.02.2001
(51) Int. Cl.: B60T 17/08

(54) **Kombinierter Betriebsbrems- und Federspeicherbremszylinder**
Combined service and spring brake cylinder
Cylindre combiné de frein de service et à ressort

(30) Priorität: 28.02.2000 DE 10009330
(43) Veröffentlichungstag der Anmeldung: 26.09.2001
(73) Patentinhaber: KNORR-BREMSE Systeme für Nutzfahrzeuge GmbH, 80809 München (DE)
(72) Erfinder: Kielbasa, Rudolf, 85757 Karlsfeld (DE)

(56) Entgegenhaltungen:
- EP-A- 0 433 571
- DE-A- 3 125 461
- DE-A- 19 830 154
- US-A- 5 205 205
- US-A- 5 676 036

## Beschreibung

Die Erfindung betrifft einen kombinierten Betriebsbrems- und Federspeicherbremszylinder für Nutzfahrzeuge mit einem zwischen einem Gehäuse des Betriebsbremszylinders und einem Gehäuse des Federspeicherbremszylinders angeordneten Zwischenstück, welches die Druckräume der Bremszylinder voneinander trennt.

Bremszylinder der genannten Art, auch Kombizylinder genannt, werden im wesentlichen nach zwei Bauprinzipien gestaltet und sind aus der Praxis bekannt. So handelt es sich entweder um Membran-Kolben-Zylinder oder um Membran-Membran-Zylinder. Beide Ausführungsformen sind grundsätzlich gleich aufgebaut, indem ein vorderer Deckel, auch als Gehäuse des Betriebsbremszylinders bezeichnet, ein Zwischenstück bzw. -flansch und ein hinterer Deckel, auch Gehäuse des Federspeicherbremszylinders genannt, vorgesehen werden. Die Verbindung des Betriebsbremszylindergehäuses mit dem Zwischenflansch erfolgt unter Verspannung eines Membranwulstes in der Stoßfuge mittels eines Spannbandes, während für die Befestigung des Federspeicherbremszylindergehäuses unterschiedliche Konstruktionen geläufig sind. Es kommen hier axiale oder radiale Verschraubungen, Sprengringverbindungen, Bajonett-Verbindungen, Spannbänder oder Bördelungen zur Anwendung.

Gemeinsam ist allen Varianten die Nutzung des Zwischenflansches als tragendes Bauteil, an dem die anderen Teile ansetzen. Derartige Bauweisen sind beispielsweise aus der GB 2 261 471 A, der EP 0 315 463 B1 und der DE 198 30 154 A1 bekannt. Diesen Kombizylindern ist der Nachteil gemeinsam, daß ein beträchtlicher Bauraum für die Herstellung der Verbindungen zwischen dem jeweiligen Gehäuse und dem Zwischenflansch benötigt wird. Ein weiterer Nachteil dieser Ausgestaltungsweisen liegt zudem darin, daß die Bereitstellung eines derartigen kombinierten Betriebsbrems- und Federspeicherbremszylinders mit einem hohen Fertigungs- und Montageaufwand verbunden ist, da relativ komplexe Komponenten mit unterschiedlichen konstruktiven Anforderungen bereitzustellen und zusammenzufügen sind.

Aus der EP 433 571 A1 ist ein kombinierter Betriebsbrems- und Federspeicherbremszylinder bekannt, bei dem das Gehäuse dreiteilig ausgebildet ist und zwei tassenförmige Gehäuseschalen aufweist, die über ein Zwischenstück miteinander verbunden sind. Das Zwischenstück ist an gegenüberliegenden Seiten mit jeweils einem endseitigen Gehäuseteil verbunden, sodass bei der Montage zwei Befestigungsschritte durchgeführt werden müssen. Ferner sind an dem Zwischenstück Anschlüsse für die Druckluftversorgung vorgesehen. Die Herstellung solcher Anschlüsse am Zwischenstück ist relativ aufwendig.

Ein weiterer Grund für den hohen Fertigungsaufwand liegt in der Bereitstellung der Druckluftanschlüsse, welche üblicherweise in Form von an den Zwischenflansch angegossenen Anschlußflanschen ausgeführt sind. Diese bekannten Druckluftanschlußflansche werden derzeit mit in wenigstens einem Nachbearbeitungsschritt eingebrachtem Gewinde versehen, wodurch das Einschrauben von Anschlußwinkeln, Voss-Anschlüssen oder Leitungen möglich ist. Aufgrund der Vielzahl unterschiedlicher Typen von Nutzfahrzeugen kann die Art und Lage der Druckluftversorgung vielfältig variieren. Es ist daher erforderlich, Kombizylinder mit einer entsprechenden Vielfalt an unterschiedlichen Druckluftanschlußflanschen bereitzustellen, um ein möglichst breites Einsatzgebiet zu ermöglichen. Diese Bauteilvielfalt führt jedoch zu hohen Fertigungsund Lagerkosten, wobei zudem ein großer Aufwand für die Logistik der Bauteile erforderlich ist.

Es ist daher Aufgabe der vorliegenden Erfindung, einen kombinierten Betriebsbremsund Federspeicherbremszylinder für Nutzfahrzeuge derart weiter zu bilden, daß er mit geringerem Fertigungsaufwand und einfacherer Montage hergestellt werden kann.

Diese Aufgabe wird erfindungsgemäß durch die Merkmale des Anspruches 1 gelöst.

Erfindungsgemäß ist somit erstmals vorgesehen, die beiden Gehäuse der Bremszylinder unmittelbar miteinander zu verbinden. Da damit gleichzeitig eine formschlüssige Fixierung des Zwischenstücks erzielt wird, vereinfacht sich die Montage des Kombizylinders wesentlich, da statt den beiden im Stand der Technik vorgesehenen Verbindungsschritten nur noch ein einziger erforderlich ist.

Ein weiterer Vorteil des erfindungsgemäßen Kombizylinders liegt darin, daß das Zwischenstück hier im wesentlichen nur noch als Trennwand zwischen den beiden Druckräumen dient, d. h. der Kraftfluß direkt über die beiden Gehäuse der Bremszylinder erfolgt. Die statischen Anforderungen an das Zwischenstück sind daher wesentlich geringer als im Stand der Technik, wodurch auch Materialien geringerer Festigkeit und beispielsweise auch Kunststoffe anstelle von Metallen zum Einsatz kommen können. Damit reduzieren sich die konstruktiven Anforderungen im Vergleich zum Stand der Technik wesentlich. Gleichzeitig erhöht sich aber damit auch die Zuverlässigkeit und Stabilität des Kombizylinders, da die Anzahl der Fügestellen und der den Kraftfluß ausgesetzten Bestandteile wesentlich reduziert ist. Ferner können die zwischen den Druckräumen der Bremszylinder auftretenden Druckkräfte weiterhin zuverlässig vom Zwischenstück aufgenommen werden, da dieses in Axialrichtung formschlüssig zwischen den Gehäusen gehalten ist.

Obwohl die Bereitstellung von Druckluftanschlüssen am Zwischenstück bislang generell einer derartigen unmittelbaren Aneinanderkopplung der beiden Gehäuse entgegenstand, ist dies mit der erfindungsgemäßen Anordnung erstmals gelungen. Damit eröffnen sich für den Durchschnittsfachmann verschiedene konstruktive Möglichkeiten, um zur erfindungsgemäßen Ausgestaltung zu gelangen.

Der erfindungsgemäße Kombizylinder zeichnet sich daher durch seine einfache Bauweise und den verringerten Montageaufwand aus.

Die Vielzahl an unterschiedlichen Bauformen für den Betriebsbremszylinder nimmt jüngst aufgrund der zunehmenden Integration von elektronischen Steuerungen ab, da die einsatzbedingt unterschiedlichen Bremsdrücke zunehmend weniger durch das Volumen in der Druckkammer des Betriebsbremszylinders und mehr durch die Einsteuerung eines geregelten Drucks in die Druckkammer gesteuert werden. Dem trägt die vorliegende Erfindung vorteilhaft Rechnung. Die gewünschte Vereinheitlichung hinsichtlich der Bauweise des Gehäuses des Betriebsbremszylinders wird durch die Bereitstellung des erfindungsgemäßen Gehäuses mit einem übergreifenden Abschnitt über die äußere Umfangsfläche des Zwischenstücks erleichtert. Dennoch ist es natürlich auch im Rahmen der Erfindung weiterhin möglich, das Volumen der Druckkammer des Betriebsbremszylinders unterschiedlich zu gestalten, da erfindungsgemäß lediglich der Bereich des Gehäuses in seiner Konstruktion vorgegeben ist, der die äußere Umfangsfläche des Zwischenstücks übergreift.

Vorteilhafte Weiterbildungen der Erfindung ergeben sich aus den Merkmalen der Unteransprüche.

So ist eine weitere Vereinfachung der Montage insbesondere dann möglich, wenn die Gehäuse formschlüssig aneinander festgelegt sind. Hierzu eignet sich beispelsweise das bereits aus dem Stand der Technik bekannte Bördelungsverfahren, mittels dem eine zuverlässige und kostengünstige Verbindung zwischen den Gehäusen hergestellt werden kann. Ein weiterer Vorteil der Festlegung mittels Bördelung liegt zudem darin, daß hierzu kein zusätzlicher Bauraum um den Kombizylinder erforderlich ist, wodurch der Platzbedarf an der Einbaustelle am Nutzfahrzeug gering gehalten werden kann. Noch ein weiterer Vorteil einer derartigen formschlüssigen Fixierung liegt darin, daß somit keine weiteren Teile wie Spannbänder oder ähnliches zur Herstellung der Verbindung erforderlich sind. Dies führt zu einer Vereinfachung der Montage.

Dadurch, daß das Zwischenstück an seiner äußeren Umfangsfläche eine Aussparung zur Aufnahme eines Randwulstes einer im Gehäuse des Betriebsbremszylinders angeordneten Membran aufweist, kann gleichzeitig mit der Montage der beiden Gehäuse auch die Membran im Betriebsbremszylinder fixiert werden. Die Anzahl der Montageschritte verringert sich dadurch weiter. Zudem ist auf diese Weise eine sehr zuverlässige Fixierung der Membran erzielbar. Hierbei hat es sich insbesondere als vorteilhaft erwiesen, wenn der Randwulst im Zuge einer Bördelung zur Verbindung der beiden Gehäuse mit fixiert wird. Alternativ ist es jedoch auch möglich, den Randwulst formschlüssig in der Nut zu halten, wobei eines der Gehäuse im Zuge der Montage derart über der auf der Umfangsfläche des Zwischenstücks vorliegenden Aussparung zu liegen kommt, daß ein Heraustreten des Randwulstes zuverlässig verhindert werden kann.

Wenn auch im Gehäuse des Federspeicherbremszylinders eine Membran angeordnet ist, wobei das Zwischenstück an seiner äußeren Umfangsfläche eine Aussparung zur Aufnahme eines Randwulstes der Membran aufweist, und wobei der Randwulst vorzugsweise durch Klemmung zwischen der äußeren Umfangsfläche des Zwischenstücks und der Innenfläche des Gehäuses des Federspeicherbremszylinders fixiert ist, kann auch ein sogenannter Membran-Membran-Zylinder auf sehr einfache und zuverlässige Weise bereitgestellt werden. Auch hierzu ist wieder nur eine geringe Anzahl an Montageschritten erforderlich.

Alternativ ist es ferner möglich, daß im Gehäuse des Federspeicherbremszylinders ein Federspeicherkolben angeordnet ist, der im Gehäuse des Federspeicherbremszylinders abgedichtet geführt ist. Diese Bauweise bietet sich insbesondere aufgrund der wesentlich vereinfachten Ausgestaltungsweise des Zwischenstücks an, da am Zwischenstück erfindungsgemäß keine Anschlußeinrichtungen zur Fixierung der Gehäuse vorgesehen sein müssen. Die Gestalt des Zwischenstücks kann daher relativ einfach gestaltet sein, wodurch auch eine Begrenzung des Hubwegs eines derartigen Federspeicherkolbens vermieden werden kann. Dadurch ist eine kompaktere Bauweise des Federspeicherbremszylinders möglich.

Von weiterem Vorteil ist es, wenn das Zwischenstück wenigstens eine Durchgangsöffnung von seiner äußeren Umfangsfläche zum Druckraum im Gehäuse des Betriebsbremszylinders aufweist, in das ein separater Druckluftanschlußstutzen einfügbar ist. Damit ist eine weitere wesentliche Vereinfachung des Zwischenstücks gegenüber dem Stand der Technik möglich, bei dem die Druckluftanschlußflansche angegossen sind. Die Bereitstellung separater Druckluftanschlußstutzen ist zwar mit einem zusätzlichen Montageschritt verbunden; dieser ist jedoch im Vergleich zu den am Gußteil erforderlichen Nachbearbeitungsschritten von geringer Bedeutung. Gleichzeitig erhöhen sich dadurch die Gestaltungsfreiheiten, da derartige separate Druckluftanschlußstutzen mit geringem konstruktiven Aufwand in unterschiedlicher Bauweise bereitstellbar sind und somit eine Anpassung an die Erfordernisse des jeweiligen Einsatzfalles möglich ist, ohne daß hierdurch unmittelbare Rückwirkungen auf die Gestalt des Kombizylinders auftreten. Daher kann die Vielfalt an unterschiedlichen Bauweisen wesentlich reduziert werden, was zu einer deutlichen Verringerung der Herstellungs- und Lagerhaltungskosten führt.

Wenn der wenigstens eine Druckluftanschlußstutzen durch das Gehäuse des Federspeicherbremszylinders und/oder das Gehäuse des Betriebsbremszylinders formschlüssig am Zwischenstück gehalten ist, kann zudem auf eine andere Verbindungstechnologie wie eine Verschraubung oder ähnliches verzichtet werden. Die Montage des erfindungsgemäßen Kombizylinders vereinfacht sich dadurch weiter. Insbesondere ist es somit auch möglich, den Umstand, daß die Gehäuse die äußere Umfangsfläche des Zwischenstücks übergreifen, gleichzeitig auch für die Fixierung der Drucklüftanschlußstutzen zu nutzen. Der erfindungsgemäße Kombizylinder zeichnet sich daher durch noch einfachere Bauweise und weiter verringertem Fertigungsaufwand aus.

Ferner ist es auch möglich, daß der wenigstens eine Druckluftanschlußstutzen verdrehsicher gehalten ist. Dadurch ist eine zuverlässige und vorbestimmte Ausgestaltung des erfindungsgemäßen Kombizylinders möglich.

Alternativ ist es auch denkbar, daß der wenigstens eine Druckluftanschlußstutzen verdrehbar gehalten ist. Dies würde eine verbesserte Anpassung an spezielle Einbaubedingungen am Nutzfahrzeug zulassen.

Die Erfindung wird nachfolgend in Ausführungsbeispielen anhand der Figuren der Zeichnung näher erläutert. Es zeigt:
Fig. 1 einen Längsschnitt durch eine erste Ausführungsform des erfindungsgemäßen kombinierten Betriebsbrems- und Federspeicherbremszylinders;
Fig. 2 eine zweite, abgewandelte Ausführungsform des erfindungsgemäßen Kombizylinders;
Fig. 3 eine dritte Ausführungsform des erfindungsgemäßen Kombizylinders;
Fig. 4 eine Detailansicht der Verbindungsstelle der Gehäuse gemäß einer vierten Ausführungsform des erfindungsgemäßen Kombizylinders;
Fig. 5 eine fünfte Ausführungsform des erfindungsgemäßen Kombizylinders;
Fig. 6 eine sechste Ausführungsform des erfindungsgemäßen Kombizylinders;
Fig. 7 eine Detaildarstellung mit angefügtem, verdrehbaren Druckluftanschlußstutzen;
Fig. 8 eine ähnliche Detaildarstellung mit einem drehfesten Druckluftanschlußstutzen; und
Fig. 9 eine Draufsicht auf die Anfügestelle für die Druckluftanschlußstutzen mit auseinandergezogenen Bestandteilen des Kombizylinders.

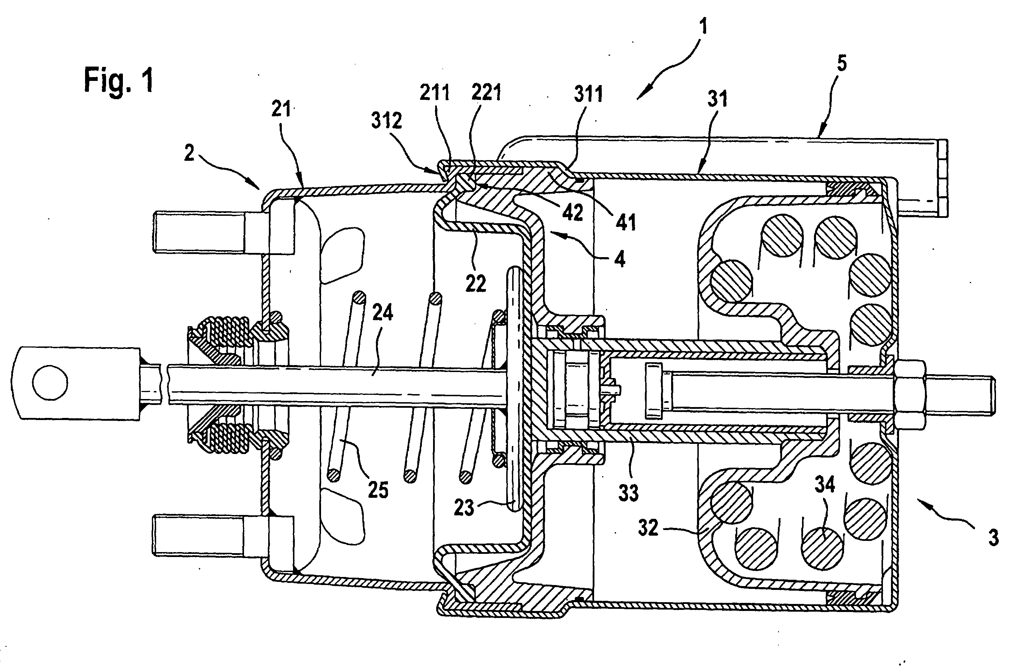

Gemäß der Darstellungen in den Fig. 1 bis 6 weist ein kombinierter Betriebsbrems- und Federspeicherbremszylinder, kurz Kombizylinder 1, einen Betriebsbremszylinder 2 und einen Federspeicherbremszylinder 3 auf, deren Druckräume bzw.
-kammern durch ein Zwischenstück 4 voneinander getrennt sind. Derartige Kombizylinder 1 dienen zur Betätigung von Bremsanlagen von Nutzfahrzeugen. Hierzu enthält der Betriebsbremszylinder 2 ein Gehäuse 21, in welchem eine druckluftbeaufschlagbare Membran 22 angeordnet ist, die auf einen Teller 23 und einen mit dem Teller 23 verbundenen Betätigungsstößel 24 wirkt.

Der Federspeicherbremszylinder 3 ist formschlüssig an den Betriebsbremszylinder 2 angekoppelt und weist ein Gehäuse 31 auf. Im Gehäuse 31 ist ein Federspeicherkolben 32 geführt, der gegenüber dem Gehäuse 31 abgedichtet ist und dadurch die Druckkammer des Federspeicherbremszylinders 3 definiert. Der Federspeicherkolben 32 wirkt mit einer Kolbenstange 33 zusammen und ist durch eine Speicherfeder 34 mit hoher Kraft vorgespannt.

In der in den Figuren dargestellten Stellung sind die Bremsen des Nutzfahrzeuges gelöst, da der Kombizylinder 1 entgegen der Druckkraft der Speicherfeder 34 mit Druckluft beaufschlagt ist. Bei einem Ausfall der Druckluftversorgung entweicht die Druckluft aus der Druckkammer des Federspeicherbremszylinders 3 derart, daß der Federspeicherkolben 32 entsprechend der Vorspannkraft der Speicherfeder 34 nach links gemäß der Darstellungen in den Figuren 1 bis 6 verschoben wird. In diesem Falle wirkt die Kolbenstange 33 auf die Membran 22 im Betriebsbremszylinder 2 derart ein, daß der Teller 23 mit dem Betätigungsstößel 24 ebenfalls nach links verschoben werden, wodurch eine Bremsung des Nutzfahrzeugs veranlaßt wird. Die Federkraft der Speicherfeder 34 ist dabei deutlich höher als die Federkraft einer Druckfeder 25 zur Vorspannung des Tellers 23.

Zur Einleitung einer regulären Bremsung wird über Druckluftanschlußstutzen 5 in einer später im Detail erläuterten Weise Druckluft in den Raum zwischen der Membran 22 und dem Zwischenstück 4 derart eingebracht, daß der Teller 23 mit dem Betätigungsstößel 24 zur Betätigung der Bremse nach links gemäß der Darstellung in den Figuren verschoben wird.

Nachfolgend wird im Detail erläutert, wie die Bestandteile des Kombizylinders 1 miteinander verbunden sind.

In der ersten Ausführungsform gemäß der Darstellung in Fig. 1 ist das Zwischenstück 4 im wesentlichen flanschartig ausgebildet und weist an seiner äußeren Umfangsfläche einen ringförmigen Vorsprung 41 auf. Dadurch bildet das Zwischenstück 4 einen Anschlag für ein Endstück eines im Querschnitt z-förmig ausgebildeten Endbereichs 211 des Gehäuses 21 des Betriebsbremszylinders 2 aus. Der Endbereich 211 übergreift hierbei die äußere Umfangsfläche des Zwischenstücks 4 teilweise.

Wie aus Fig. 1 erkennbar ist, ist auch das Gehäuse 31 des Federspeicherbremszylinders 3 mit einem im Querschnitt im wesentlichen z-förmig profilierten Endbereich 311 ausgebildet. Der Endbereich 311 nutzt ebenfalls den Vorsprung 41 auf der Umfangsfläche des Zwischenstücks 4 als Anschlag. Ferner übergreift der Endbereich 311 die gesamte äußere Umfangsfläche des Zwischenstücks 4 und einen Teil des Endbereichs 211 des Gehäuses 21. Am äußersten Ende des Endbereichs 311 ist ein Bördelabschnitt 312 ausgebildet, der zum Abschluß der Montage des Kombizylinders 1 radial nach innen gebördelt wird und dabei dem Konturverlauf des Endbereichs 211 im z-förmigen Querschnittsbereich folgt.

Das Gehäuse 31 ist damit formschlüssig mit dem Gehäuse 21 verbunden, wobei zudem auch das Zwischenstück 4 durch den beidseitig beaufschlagten Vorsprung 41 formschlüssig zwischen den Gehäusen fixiert ist.

Am Zwischenstück 4 ist ferner eine Aussparung 42 auf Seiten des Betriebsbremszylinders 2 ausgebildet, in welche ein Randwulst 221 der Membran 22 eingefügt ist. Der Randwulst 221 wird hierbei während der Montage in die Aussparung 42 eingefügt, bevor das Gehäuse 21 über das Zwischenstück 4 geschoben wird. Der Randwulst 221 wird dadurch formschlüssig am Ort gehalten und in der Aussparung derart zusammengedrückt, daß er eine Abdichtung herstellt.

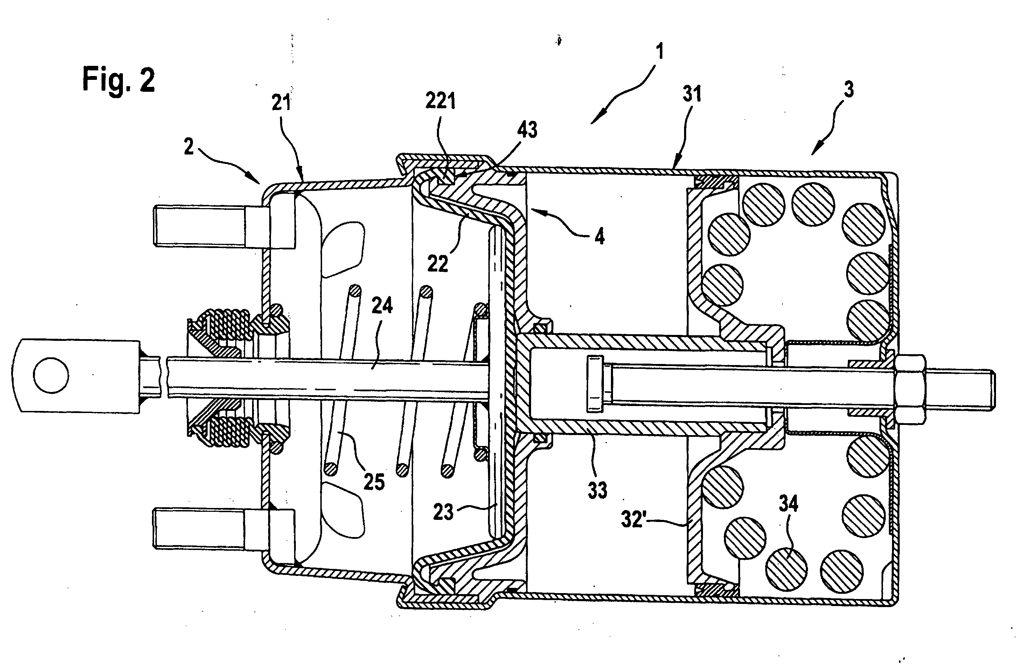

In Fig. 2 ist eine weitere, etwas abgewandelte Ausführungsform des erfindungsgemäßen Kombizylinders 1 dargestellt. Abweichend von der Ausführungsform gemäß Fig. 1 ist hier der Randwulst 221 der Membran 22 in eine nutförmige Aussparung 43 an der äußeren Umfangsfläche des Zwischenstücks 4 eingefügt. Die Fixierung des Randwulstes 221 in der nutförmigen Aussparung 43 erfolgt hier durch den Umgriff des Endbereichs 211 um die äußere Umfangsfläche des Zwischenstücks 4, wodurch der Randwulst 221 radial verpreßt wird. Dadurch wird gleichzeitig wie bei einem O-Ring eine Abdichtung hergestellt. Im Gegensatz zur Ausführungsform gemäß Fig. 1 wird der Randwulst 221 hier somit nicht axial zusammengedrückt.

Ein weiterer Unterschied zwischen der ersten und zweiten Ausführungsform liegt in der Gestalt des Federspeicherkolbens 32', der gemäß der zweiten Ausführungsform konstruktiv einfacher gestaltet ist. Gemäß der zweiten Ausführungsform wird hierbei ein besonderer Vorteil aus der vereinfachten Gestalt des Zwischenstücks 4 gezogen, welches in dieser Ausführungsform nur sehr begrenzt in die Druckkammer des Federspeicherbremszylinders 3 hinein ragt. Der Federspeicherkolben 32' kann daher die gesamte Länge der Druckkammer im Federspeicherbremszylinder 3 in axialer Richtung als Verfahrweg nutzen.

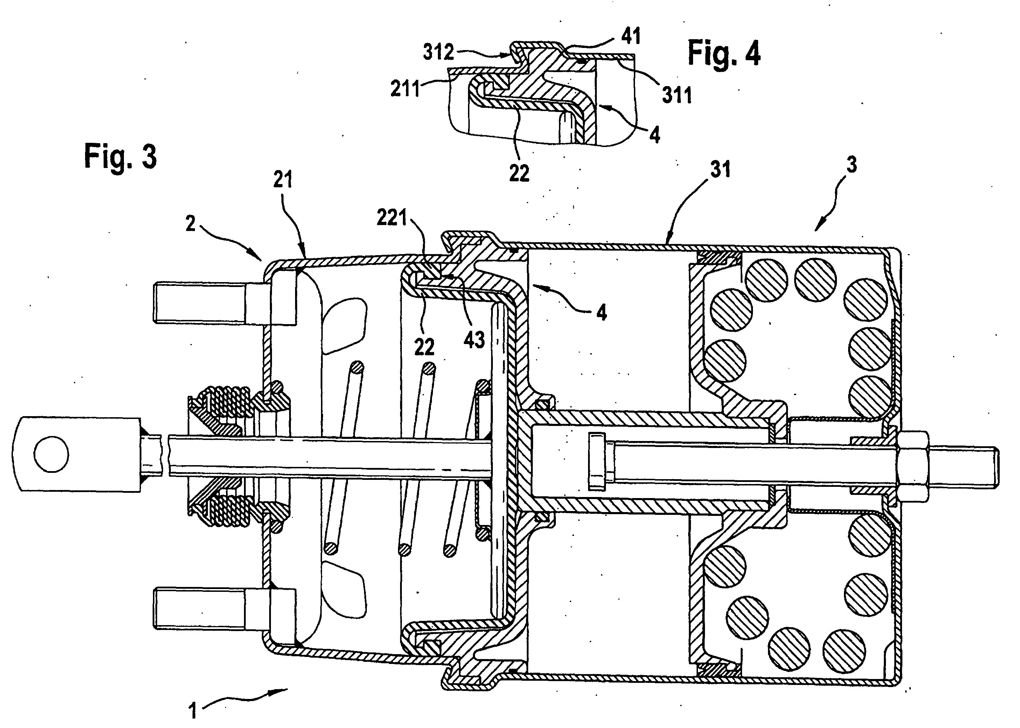

In Fig. 3 ist eine dritte Ausführungsform des erfindungsgemäßen Kombizylinders 1 gezeigt. Als Abwandlung von der zweiten Ausführungsform ist das Zwischenstück 4 hier so ausgebildet, daß die nutförmige Aussparung 43 nicht an der äußeren Umfangsfläche zu liegen kommt, d. h. nicht vom Endbereich 211 des Gehäuses 21 umgriffen wird, sondern von einem Mittelbereich des Gehäuses 21.

In der in Fig. 4 im Detailausschnitt gezeigten vierten Ausführungsform ist dargestellt, daß das Gehäuse 21 des Betriebsbremszylinders 2 zudem auch ohne z-förmigen Endbereich 211 ausgebildet sein kann. In dieser Ausführungsform ist das Endstück des Gehäuses 21 lediglich einfach radial nach außen gebogen, wie dies bei derzeit üblicherweise verwendeten Standardgehäusen für Betriebsbremszylinder 2 der Fall ist. Diese können daher gemäß der vierten Ausführungsform weiterhin verwendet werden. Eine zuverlässige Verbindung der Bestandteile des Kombizylinders 1 wird dabei weiterhin durch das Umbördeln des Bördelabschnitts 312 am Gehäuse 31 erreicht.

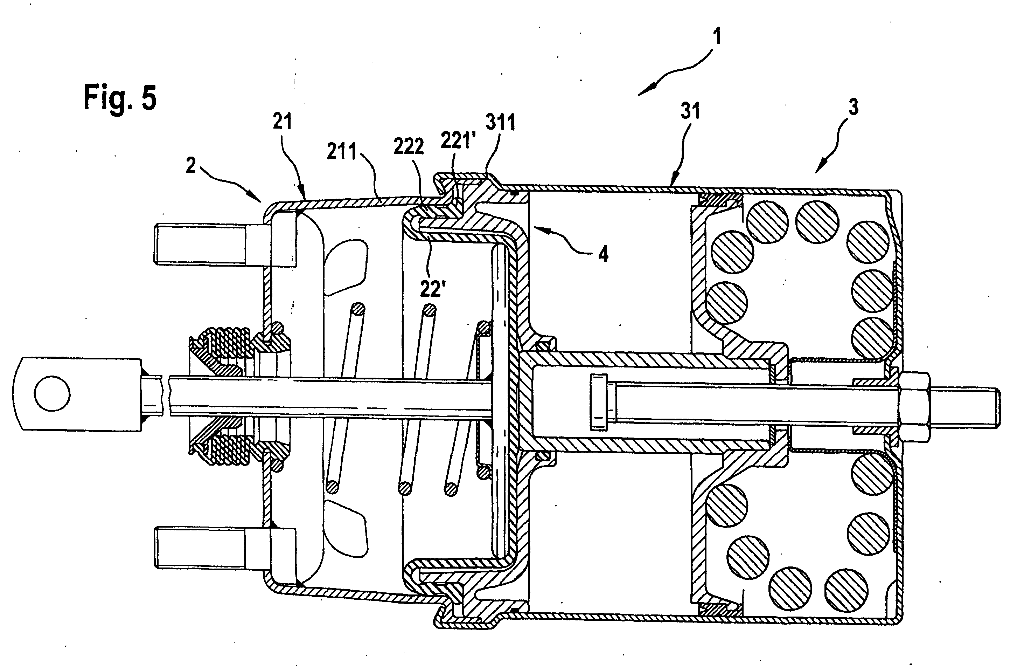

In Fig. 5 ist eine fünfte Ausführungsform des erfindungsgemäßen Kombizylinders 1 dargestellt, bei der an der Membran 22' etwas beabstandet vor dem Randwulst 221' ein weiterer Wulst 222 angeordnet ist. Während der Randwulst 221' formschlüssig in einem Freiraum zwischen dem z-förmigen Endbereich 211 und dem Zwischenstück 4 aufgenommen und damit ein Herauslösen der Membran 22' verhindert ist, dient der Wulst 222 zur Herstellung einer ausreichenden Dichtigkeit zwischen dem Gehäuse 21 des Betriebsbremszylinders 2 und dem Zwischenstück 4.

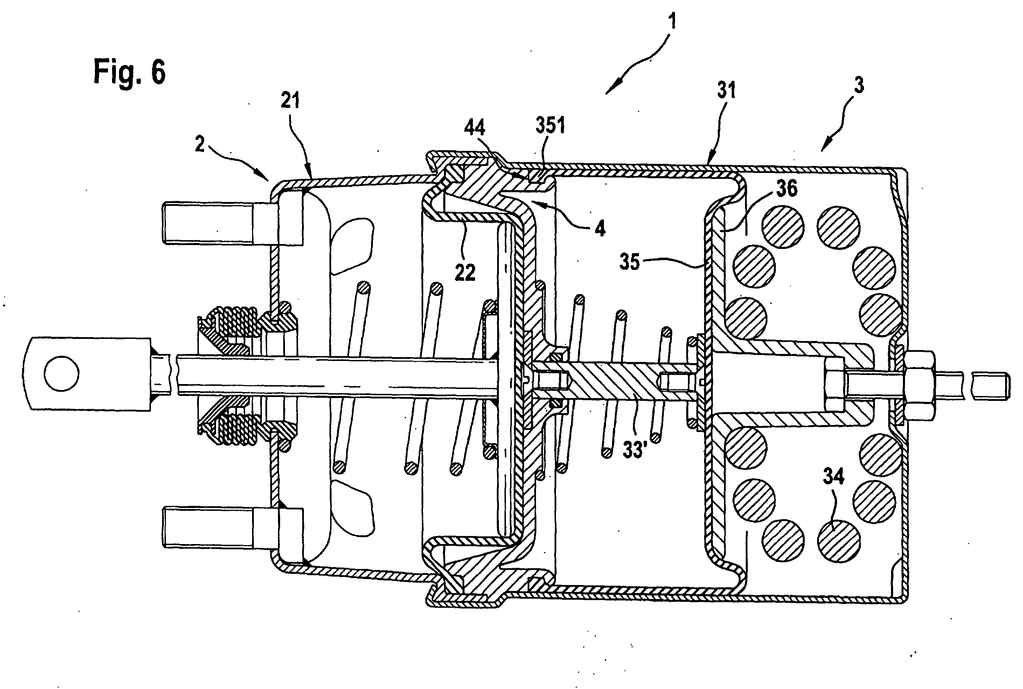

In Fig. 6 ist eine sechste Ausführungsform des erfindungsgemäßen Kombizylinders 1 gezeigt, in der dieser als sogenannter Membran-Membran-Zylinder ausgebildet ist. Während die Verbindung zwischen dem Gehäuse 21 und 31 bzw. dem Zwischenflansch 4 in ähnlicher Weise wie in der ersten Ausführungsform hergestellt ist, weist der Kombizylinder 1 gemäß der sechsten Ausführungsform auch in der Druckkammer des Federspeicherbremszylinders 1 eine Membran 35 auf. Die Membran 35 tritt hierbei an die Stelle des Federspeicherkolbens 32 bzw. dessen Abdichtung gegenüber dem Gehäuse 31. Gemäß der sechsten Ausführungsform ist ein Randwulst 351 der Membran . 35 in eine nutförmige Aussparung 44 im Zwischenstück 4 aufgenommen. Die Fixierung des Randwulstes 351 erfolgt hierbei durch den Umgriff durch das Gehäuse 31 des Federspeicherbremszylinders 3. In analoger Weise wie in den Ausführungsformen 1 bis 5 wirkt die Speicherfeder 34 in dieser Ausführungsform auf einen Teller 36, der mit einer hier federnd vorgespannten Kolbenstange 33' zur Einleitung der Bremsung zusammenwirkt.

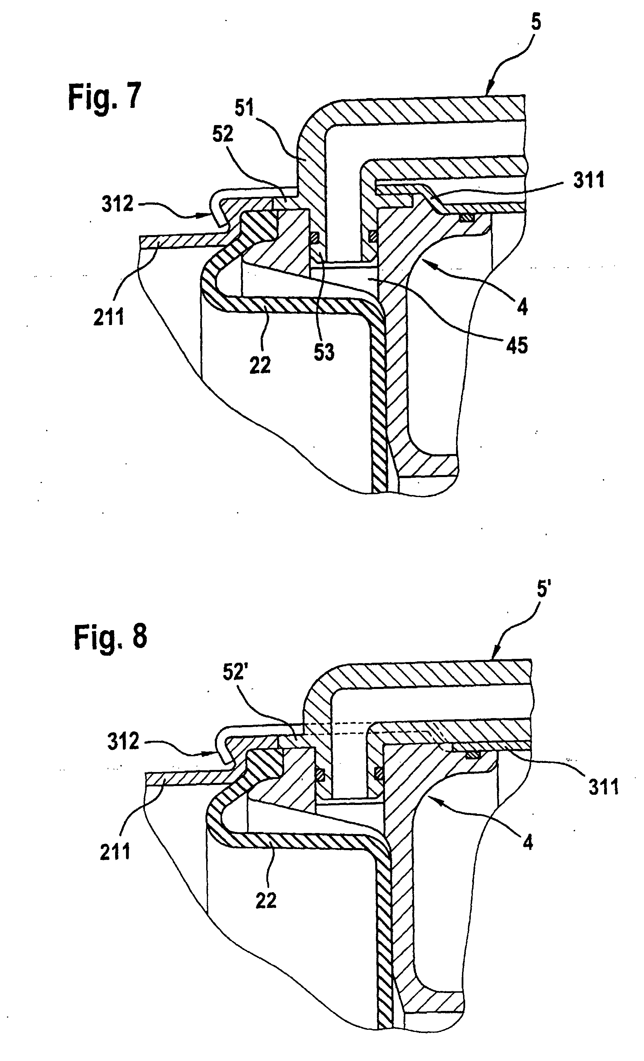

In den Fig. 7 bis 9 ist dargestellt, wie ein Druckluftanschlußstutzen 5 bzw. 5' an den Kombizylinder 1 angekoppelt werden kann.

Gemäß der Darstellung in den Fig. 7 und 8 ist der Druckluftanschlußstutzen 5 bzw. 5' als abgewinkeltes Rohr ausgebildet. Wie aus Fig. 7 erkennbar ist, weist der Druckluftanschlußstutzen 5 in einem abgewinkelten Endabschnitt 51 einen Flansch 52 auf, der im wesentlichen kreisförmig ausgebildet ist. An den Flansch 52 schließt sich ein Anschlußrohr 53 an, welches in eine Durchgangsöffnung bzw. ein Loch 45 im Zwischenstück 4 eingefügt ist. Das Durchgangsloch 45 erstreckt sich hierbei von der äußeren Umfangsfläche des Zwischenstücks 4 zur Druckkammer des Betriebsbremszylinders 2 und insbesondere in den Raum zwischen der Membran 22 und dem Zwischenstück 4. Das Anschlußrohr 53 ist ferner über einen O-Ring gegenüber dem Durchgangsloch 45 abgedichtet.

Der Druckluftanschlußstutzen 5' gemäß der Darstellung in Fig. 8 unterscheidet sich von dem in Fig. 7 gezeigten dadurch, daß kein kreisförmiger Flansch sondern ein im wesentlichen rechteckförmiger Flansch 52' vorgesehen ist, der keine Verdrehung des Druckluftanschlußstutzens 5' um die Hauptachse des abgewinkelten Endabschnitts zuläßt. In der Ausführungsform gemäß Fig. 7 ist dagegen eine freie Verdrehung des Druckluftanschlußstutzens 5 um die Achse des Endabschnitts 51 möglich.

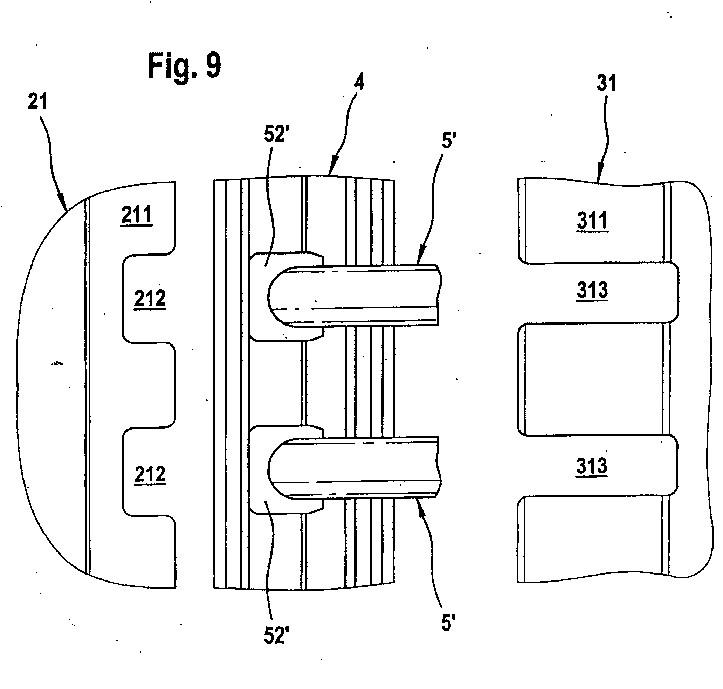

In Fig. 9 ist anhand des verdrehgesicherten Druckluftanschlußstutzens 5' gezeigt, wie dieser am Kombizylinder 1 fixiert ist.

Wie insbesondere aus den Fig. 7 und 8 erkennbar ist, übergreift der Endbereich 311 des Gehäuses 31 den Flansch 52 bzw. 52' des Druckluftanschlußstutzens 5 bzw. 5'. Aus Fig. 9 ist hierzu erkennbar, daß der Endbereich 211 des Gehäuses 21 des Betriebsbremszylinders 2 Aussparungen 212 aufweist, welche in ihrer Gestalt dem Flansch 52' des Druckluftanschlußstutzens 5' entsprechen. In der in Fig. 9 gezeigten Ausführungsform ist der Flansch 52' im wesentlichen rechteckförmig ausgebildet, so daß sich im Zusammenwirken mit den Aussparungen 212 ein verdrehsicheres Ineinandergreifen ergibt. Im Falle eines kreisförmigen Flansches 52 ergibt sich dagegen keine Verdrehsicherung, so daß die Druckluftanschlußstutzen 5 verdrehbar sind. Ferner ist auch der Endbereich 311 des Gehäuses 31 des Federspeicherbremszylinders 3 mit Aussparungen 313 versehen, welche im wesentlichen dem Durchmesser des Druckluftanschlußstutzens 5' angepaßt sind. Im montierten Zustand übergreifen die verbleibenden Abschnitte des Endbereichs 311 den Flansch 52 bzw. 52' der Druckluftanschlußstutzen derart, daß diese nicht mehr vom Kombizylinder 1 abgezogen werden können. Somit ist ein formschlüssiges Ineinandergreifen der Komponenten hergestellt. Die Montage der Druckluftanschlußstutzen 5 bzw. 5' erfolgt daher im Zuge der Gesamtmontage des Kombizylinders 1.

An die dem Kombizylinder 1 fernen Enden der Druckluftanschlußstutzen kann dann in bekannter Weise ein Druckluftsystem angeschlossen werden, wobei hierzu beliebige Adapter zur Anpassung an unterschiedliche Systeme anfügbar sind. Der Kombizylinder 1 mit derart angefügten Druckluftanschlußstutzen erfordert hierbei insbesondere in radialer Richtung nur sehr geringen Bauraum und ermöglicht die Anordnung in vielen Einbaulagen.

Die Erfindung läßt neben den hier aufgezeigten Ausführungsformen weitere Gestaltungsansätze zu.

So kann die unmittelbare Verbindung zwischen dem Gehäuse 21 und dem Gehäuse 31 auch auf andere Weise als durch Bördelung hergestellt werden. Hierzu kann auf die zahlreichen im Stand der Technik bekannten Verbindungsweisen zurückgegriffen werden, wobei diese jedoch gegenüber der Bördelung mit zusätzlichem Montageaufwand oder einer Vergrößerung der Gesamtdimensionen verbunden sind.

Ferner ist es auch möglich, daß der Endabschnitt des Gehäuses 21 einen Endbereich des Gehäuses 31 übergreift und gegenüber diesem z. B. abgebördelt ist.

Die Druckluftanschlußstutzen 5 bzw. 5' können auch radial wegführend vom Kombizylinder 1 vorgesehen sein.

Die Erfindung schafft somit einen kombinierten Betriebsbrems- und Federspeicherbremszylinder 1 für Nutzfahrzeuge mit einem zwischen dem Gehäuse 21 des Betriebsbremszylinders 2 und dem Gehäuse 31 des Federspeicherbremszylinders 3 angeordneten Zwischenstück 4, welches die Druckkammern der Bremszylinder voneinander trennt, wobei die Gehäuse 21 bzw. 31 eine äußere Umfangsfläche des Zwischenstücks 4 übergreifen und dabei unmittelbar aneinander festgelegt sind. Dadurch wird der Kraftfluß unmittelbar von einem Gehäuse auf das andere geleitet. Gleichzeitig ist das Zwischenstück 4 in Axialrichtung formschlüssig zwischen den Endbereichen der Gehäuse 21 bzw. 31 aufgenommen und somit fixiert. Der erfindungsgemäße kombinierte Betriebsbrems- und Federspeicherbremszylinder 1 zeichnet sich daher durch eine einfache Bauweise und eine vereinfachte Montage mit reduzierten Montageschritten bei einer verringerten Anzahl an Bauteilen aus.

## Patentansprüche

1. Kombinierter Betriebsbrems- und Federspeicherbremszylinder (1) für Nutzfahrzeuge, mit einem zwischen einem Gehäuse (21) des Betriebsbremszylinders (2) und einem Gehäuse (31) des Federspeicherbremszylinders (3) angeordneten Zwischenstück (4), welches die Druckräume der Bremszylinder voneinander trennt, **dadurch gekennzeichnet, dass** die Gehäuse (21, 31) formschlüssig aneinander festgelegt sind und eine äußere Umfangsfläche des Zwischenstücks (4) derart übergreifen, dass das Zwischenstück (4) in Axialrichtung formschlüssig gehalten ist.

2. Kombinierte Betriebsbrems- und Federspeicherbremszylinder nach Anspruch 1, **dadurch gekennzeichnet, dass** die Gehäuse (21, 31) durch Bördelung aneinander festgelegt sind.

3. Kombinierter Betriebsbrems- und Federspeicherbremszylinder nach Anspruch 1 oder 2, **dadurch gekennzeichnet, daß** das Zwischenstück (4) an seiner äußeren Umfangsfläche eine Aussparung (42; 43) zur Aufnahme eines Randwulstes (221; 221') einer im Gehäuse (21) des Betriebsbremszylinders (2) angeordneten Membran (22; 22') aufweist, und daß der Randwulst (221; 221') durch Bördelung fixiert ist.

4. Kombinierter Betriebsbrems- und Federspeicherbremszylinder nach einem der Ansprüche 1 bis 3, **dadurch gekennzeichnet, daß** im Gehäuse (31) des Federspeicherbremszylinders (3) eine Membran (35) angeordnet ist, wobei das Zwischenstück (4) an seiner äußeren Umfangsfläche eine Aussparung (44) zur Aufnahme eines Randwulstes (351) der Membran (35) aufweist, und wobei der Randwulst (351) durch Klemmung zwischen der äußeren Umfangsfläche des Zwischenstücks (4) und dem Gehäuse (31) des Federspeicherbremszylinders (3) fixiert ist.

5. Kombinierter Betriebsbrems- und Federspeicherbremszylinder nach einem der Ansprüche 1 bis 3, **dadurch gekennzeichnet, daß** im Gehäuse (31) des Federspeicherbremszylinders (3) ein Federspeicherkolben (32; 32') angeordnet ist, der im Gehäuse (31) des Federspeicherbremszylinders (3) abgedichtet geführt ist.

6. Kombinierter Betriebsbrems- und Federspeicherbremszylinder nach einem der Ansprüche 1 bis 5, **dadurch gekennzeichnet, daß** das Zwischenstück (4) wenigstens eine Durchgangsöffnung (45) von seiner äußeren Umfangsfläche zum Druckraum im Gehäuse (21) des Betriebsbremszylinders (2) aufweist, in die ein separater Druckluftanschlußstutzen (5; 5') einfügbar ist.

7. Kombinierter Betriebsbrems- und Federspeicherbremszylinder nach Anspruch 6, **dadurch gekennzeichnet, daß** der wenigstens eine Druckluftanschlußstutzen (5; 5') durch das Gehäuse (31) des Federspeicherbremszylinders (3) und/oder das Gehäuse (21) des Betriebsbremszylinders (2) formschlüssig am Zwischenstück (4) gehalten ist.

8. Kombinierter Betriebsbrems- und Federspeicherbremszylinder nach Anspruch 6 oder 7, **dadurch gekennzeichnet, daß** der wenigstens eine Druckluftanschlußstutzen (5') verdrehsicher gehalten ist.

9. Kombinierter Betriebsbrems- und Federspeicherbremszylinder nach Anspruch 6 oder 7, **dadurch gekennzeichnet, daß** der wenigstens eine Druckluftanschlußstutzen (5) verdrehbar gehalten ist.

## Claims

1. A combined service brake and spring brake cylinder (1) for utility vehicles with a separator (4) positioned between a housing (21) of the service brake cylinder (2) and a housing (31) of the spring brake cylinder (3) which separates the pressure chambers of the brake cylinders,
**characterised in that**
the housings (21, 31) are fixed to one another in a positive fit and wrap around an outer circumferential surface of the separator (4) in such a manner that the separator (4) is held axially in a positive fit.

2. A combined service brake and spring brake cylinder in accordance with claim 1,
**characterised in that**
the housings (21, 31) are fixed to one another by means of flanging.

3. A combined service brake and spring brake cylinder in accordance with claim 1 or 2,
**characterise**d in that
the separator (4) has a recess (42; 43) to receive an edge bead (221; 221') of a membrane (22; 22') positioned in a housing (21) of the service brake cylinder (2) on its outer circumferential surface and that the edge bead (221; 221') is fixed by means of flanging.

4. A combined service brake and spring brake cylinder in accordance with one of claims 1 to 3,
**characterised in that**
there is a membrane (35) positioned in the housing (31) of the spring brake cylinder (3), the separator (4) having on its outer circumferential surface a recess (44) to receive an edge bead (351), the edge bead (351) being fixed between the outer circumferential surface of the separator (4) and the housing (31) of the spring brake cylinder (3) by means of clamping.

5. A combined service brake and spring brake cylinder in accordance with one of claims 1 to 3,
**characterised in that**
positioned in the housing (31) of the spring brake cylinder (3) is a spring-loaded piston (32; 32') which operates sealed in the housing (31) of the spring brake cylinder (3).

6. A combined service brake and spring brake cylinder in accordance with one of claims 1 to 5,
**characterised in that**
the separator (4) has at least one through opening (45) from its outer circumferential surface to the pressure chamber in the housing (21) of the service brake cylinder (2) into which a separate compressed air connector (5; 5') can be inserted.

7. A combined service brake and spring brake cylinder in accordance with claim 6,
**characterised in that**
the at least one compressed air connector (5; 5') is fixed in a positive fit to the separator (4) by the housing (31) of the spring brake cylinder (3) and/or the housing (21) of the service brake cylinder (2).

8. A combined service brake and spring brake cylinder in accordance with claim 6 or 7,
**characterised in that**
the at least one compressed air connector (5') is fixed such that it is unable to rotate.

9. A combined service brake and spring brake cylinder in accordance with claim 6 or 7,
**characterised in that**
the at least one compressed air connector (5 ) is fixed such that it is able to rotate.

## Revendications

1. Cylindre (1) combiné de frein de service et de frein à ressort pour véhicules utilitaires, comportant un élément (4) intermédiaire, qui est disposé entre un boîtier (21) du cylindre (2) de frein de service et un boîtier (31) du cylindre (3) de frein à ressort et qui sépare l'une de l'autre les chambres de pression des cylindres de frein, **caractérisé en ce que** les boîtiers (21, 31) sont fixés l'un contre l'autre par complémentarité de forme et recouvrent une face périphérique extérieure de l'élément (4) intermédiaire de telle sorte que l'élément (4) intermédiaire est maintenu en direction axiale par complémentarité de forme.

2. Cylindre combiné de frein de service et de frein à ressort suivant la revendication 1, **caractérisé en ce que** les boîtiers (21, 31) sont fixés l'un contre l'autre par rabattement des bords.

3. Cylindre combiné de frein de service et de frein à ressort suivant la revendication 1 ou 2, **caractérisé en ce que** l'élément (4) intermédiaire comporte sur sa face périphérique extérieure un évidement (42 ; 43) pour recevoir un bourrelet (221 ; 221') marginal d'une membrane (22 ; 22') disposée dans le boîtier (21) du cylindre (2) de frein de service, et **en ce que** le bourrelet (221 ; 221') marginal est immobilisé par rabattement des bords.

4. Cylindre combiné de frein de service et de frein à ressort suivant l'une des revendications 1 à 3, **caractérisé en ce qu'**une membrane (35) est disposée dans le boîtier (31) du cylindre (3) de frein à ressort, l'élément (4) intermédiaire comportant sur sa face périphérique extérieure un évidement (44) pour recevoir un bourrelet (351) marginal de la membrane (35), et le bourrelet (351) marginal étant immobilisé par serrage entre la face périphérique extérieure de l'élément (4) intermédiaire et le boîtier (31) du cylindre (3) de frein à ressort.

5. Cylindre combiné de frein de service et de frein à ressort suivant l'une des revendications 1 à 3, **caractérisé en ce qu'**un piston (32 ; 32') d'accumulateur à ressort est disposé dans le boîtier (31) du cylindre (3) de frein à ressort, piston qui est guidé en étanchéité dans le boîtier (31) du cylindre (3) de frein à ressort.

6. Cylindre combiné de frein de service et de frein à ressort suivant l'une des revendications 1 à 5, **caractérisé en ce que** l'élément (4) intermédiaire comporte au moins une ouverture (45) de passage depuis sa face périphérique extérieure vers la chambre de pression dans le boîtier (21) du cylindre (2) de frein de service, ouverture dans laquelle peut être inséré un raccord (5 ; 5') séparé d'air comprimé.

7. Cylindre combiné de frein de service et de frein à ressort suivant la revendication 6, **caractérisé en ce que** le au moins un raccord (5 ; 5') d'air comprimé est maintenu par complémentarité de forme sur l'élément (4) intermédiaire par le boîtier (31) du cylindre (3) de frein à ressort et/ou par le boîtier (21) du cylindre (2) de frein de service.

8. Cylindre combiné de frein de service et de frein à ressort suivant la revendication 6 ou 7, **caractérisé en ce que** le au moins un raccord (5') d'air comprimé est maintenu en étant bloqué en rotation.

9. Cylindre combiné de frein de service et de frein à ressort suivant la revendication 6 ou 7, **caractérisé en ce que** le au moins un raccord (5) d'air comprimé est maintenu en étant rotatif.
